# EUROPÄISCHE PATENTSCHRIFT

(11) **EP 0 899 853 B1**
(45) Veröffentlichungstag und Bekanntmachung des Hinweises auf die Patenterteilung: **20.07.2005**
(21) Anmeldenummer: 98115287.9
(22) Anmeldetag: 13.08.1998
(51) Int. Cl.: H02K 5/06, H02K 5/20

(54) **Ständergehäuse eines Elektromotors**
Stator frame of an electrical motor
Boîtier statorique d'un moteur électrique

(30) Priorität: 26.08.1997 DE 19737165
(43) Veröffentlichungstag der Anmeldung: 03.03.1999
(73) Patentinhaber: SIEMENS AKTIENGESELLSCHAFT, 80333 München (DE)
(72) Erfinder: Verhoeven, Daniel, Dipl.-Ing. (FH), 90491 Nürnberg (DE)

(56) Entgegenhaltungen:
- US-A- 1 884 573
- US-A- 4 441 042
- PATENT ABSTRACTS OF JAPAN vol. 018, no. 504 (E-1608), 21. September 1994 & JP 06 169542 A (TOSHIBA CORP), 14. Juni 1994
- PATENT ABSTRACTS OF JAPAN vol. 095, no. 008, 29. September 1995 & JP 07 123644 A (EBARA CORP), 12. Mai 1995
- PATENT ABSTRACTS OF JAPAN vol. 096, no. 002, 29. Februar 1996 & JP 07 264802 A (HITACHI LTD), 13. Oktober 1995

## Beschreibung

Die Erfindung betrifft ein gegossenes Formteil eines Elektromotors mit einem mindestens ein Blechpaket aufweisenden Ständer, insbesondere eines durchzugsbelüfteten innengekühlten Elektromotors, welches Formteil in axialer Richtung des Elektromotors verlaufende, sich radial nach innen verjüngende Rippen aufweist.

Bei derartigen Maschinen werden die innenliegenden Kühlkanäle, wie z. B. in der EP 0 046 315 beschrieben, durch Zusammenfügen von einzelnen Profilstahlträgern gebildet. Aus der JP-A-6169542 ist Gehäuse mit Rippen für elektrische Maschinen bekannt, das radial angeordnete Gehäuseinnenrippen aufweist. Eine Fixierung des Ständerblechpakets durch diese Rippen ist nur bedingt möglich, da bei Ausdrehen dieses Gehäuses Schwingungen im Bereich der Gehäuserippen auftreten, die einen ordentlichen Blechsitz nicht mehr garantieren.

Aus der JP-07123644 ist ebenfalls ein einteilig gegossenes Gehäuse einer elektrischen Maschine mit radial zur Motorachse ausgerichteten Gehäuseinnenrippen als Stege bekannt. Dabei ist ebenso ein ausreichender Blechsitz aufgrund der Form der Rippen nicht gewährleistet. Ein Gußverfahren wird bisher, wie im AEG-Handbuch Band 1 (Drehstrom-Asynchronmotoren) 1965, auf Seite 44 gezeigt, nur für Einzelkomponenten verwendet. Ständergehäusekonstruktionen im Gußverfahren herzustellen, ist nur mit erheblichen formtechnischem und damit finanziellem Aufwand machbar. So ist aus der US 3,443,132 ein gegossenes gehäuse aus zwei Hälften bekannt.

Die Aufgabe der Erfindung besteht darin, für durchzugsbelüftete Elektromotoren eine optimale Gehäuseform zu entwickeln, die in der Kühlwirkung der geschweißten Konstruktionen eben bürtig ist und sowohl während der Bearbeitung als auch im anschließenden Motorbetrieb schwingungsarm ist.

Die Lösung der gestellten Aufgabe gelingt durch, die Merkmale des Anspruchs 1.

Die weiteren Ausgestaltungen des Ständergehäuses in mehrere Teile oder der Gehäuseinnenrippe in mindestens 2 V-förmig angeordneten Stegen, erhöht die Quersteifigkeit der Rippe bei verringertem Materialeinsatz. Dadurch werden die Rippen bei der Bearbeitung (z.B. Ausdrehen des Blechpaketsitzes oder sonstigen spanabhebenden oder oberflächenverändernden Arbeitsschritten) weniger stark in Schwingung versetzt, was zu einer Reduzierung der Geräuschemission bei der Bearbeitung, zu kürzeren Bearbeitungszeiten und zu einer verbesserten Oberfläche und damit zu einem besseren Blechpaketsitz führt. Damit stellt sich eine Drehmomentübertragung (Blechpaket-Gehäuse-Gehäusefüße) durch Kraftschluß, vorzugsweise Preßsitz, ein.

Somit sind keine weiteren Montageelemente zur Drehmomentübertragung notwendig. Außerdem ergibt sich in axialer Richtung eine konstante Quersteifigkeit der Rippe.

Eine derartige Ausgestaltung der Innenrippen kommt ohne zusätzliche innenliegende Abstützelemente aus. Dadurch wird eine ungehinderte, axiale Strömung der Kühlluft zwischen Ständerblechpaket und Ständergehäusewand ermöglicht. Außerdem weist der Rippenquerschnitt in alle Richtungen ein hohes Flächenmoment auf. Dadurch wird den Schwingungsanregungen des Motors in der achsparallelen horizontalen und vertikalen Schwingebene auch lokal ein hoher Widerstand entgegengesetzt.

Gießtechnisch ergeben sich keine erheblichen Materialanhäufungen, sondern es bestehen fließende Wanddickenübergänge, so daß speziell bei V-förmig ausgebildeten Rippen die Lunkerbildung erheblich reduziert wird. Die Ausgestaltung der Rippen durch Orientierung in Hauptvorzugsrichtungen verbessert den Formprozeß, da weniger Modell- und Formteilungen erforderlich sind, und somit die Form- und Maßhaltigkeit des Gehäuses erhöht wird. Ein zu großes Ubermaß des Blechpaketdurchmessers zur bearbeiteten Bohrung des Ständergehäuses weitet die V-Rippe auf. Es entsteht ein "Ziehharmonika-Effekt", der den Pressdruck reduziert. Um dies zu verhindern, können außen Versteifungsrippen angebracht werden, die die tangentialen Spannungsanteile in der Gehäusewand aufgrund des Fügedrucks aufnehmen.

Die Erfindung sowie weitere vorteilhafte Ausgestaltungen der Erfindung gemäß Merkmalen der Unteransprüche werden im folgenden anhand schematisch dargestellter Ausführungsbeispiele in der Zeichnung näher erläutert; darin zeigt:
- FIG 1: eine schematisch dargestellte V-Form einer Gehäuseinnenrippe mit Versteifungselement in perspektivischer Ansicht
- FIG 2: den Querschnitt einer Ständergehäusehälfte für horizontal aufgestellte Motoren

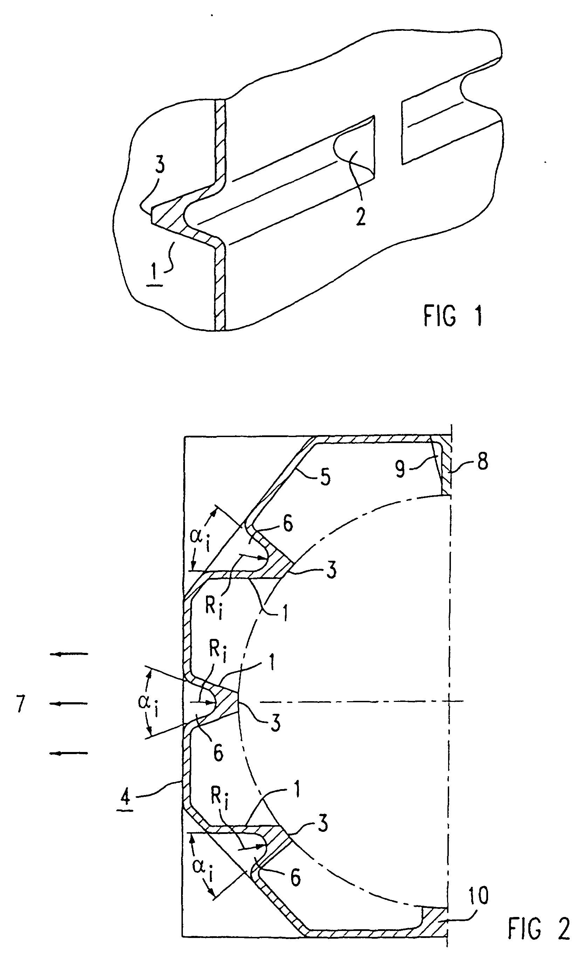

FIG 1 zeigt eine schematisch dargestellte aus zwei Stegen gebildete V-Form einer Gehäuseinnenrippe 1 mit Versteifungselement 2 in perspektivischer Ansicht und den bearbeiteten Anlageflächen 3 für ein nicht dargestelltes Blechpaket.

FIG 2 zeigt den Querschnitt einer gegossenen Ständergehäusehälfte 4 aus Gußeisen für horizontal aufgestellte Hochspannungsmotoren, mit drei derartigen , aus jeweils zwei Stegen gebildete V-förmigen Gehäuseinnenrippen 1 und deren Hauptvorzugsrichtung. Die nach außen weisenden Öffnungswinkel αᵢ dieser Gehäuseinnenrippen 1 sind grundsätzlich frei wählbar. Sie bestimmen die gewünschte Steifigkeit, die Strömungsquerschnittsfläche zwischen Blechpaket und Gehäusewand 5 und das Design. Die Radien Ri der äußeren Aussparungen 6 der V-förmigen Gehäuseinnenrippen 1 beeinflußen die Entformbarkeit sowie die Materialstärke und damit die Härte an den Bearbeitungsflächen. Die drei V-förmigen Gehäuseinnenrippen 1 weisen eine Hauptvorzugsrichtung auf, die der Hauptentformungsrichtung 7 des Gußmodells entspricht. Die obere Rippe 8 ist nicht in V-Form ausgeführt, da dies bei horizontal aufgestellten Motoren ein Wasserbecken bildet und somit dort verstärkt Korrosionserscheinungen auftreten können. Ein Versteifungselement 9 kann in diesem Fall von innen an die radiale Rippe 8 gesetzt werden. Grundsätzlich ist aber an dieser Stelle die Ausbildung einer V-Rippe möglich, z. B. bei vertikal eingesetzten Motoren oder wenn auf sonstige Art und Weise die Wasseransammlung vermieden wird. Die Fußrippe 10 ist ebenfalls nicht in V-Form ausgebildet, da die Rippenhöhe sehr niedrig ist. Durch die V-förmigen Rippen wird der Gehäusemantel mehrfach abgewinkelt, was zu einer Verkleinerung der freien, ebenen Fläche führt. Somit wird die Körperschallemission herabgesetzt.

Ferner sind Modifikationen und Variationen basierend auf den Inhalt der beigefügten Ansprüche möglich.

## Patentansprüche

1. Gegossenes Formteil (4) eines Elektromotors mit mindestens ein Blechpaket aufweisenden Ständer, insbesondere eines durchzugsbelüfteten innengekühlten Elektromotors, welches Formteil (4) in axialer Richtung des Elektromotors verlaufende, sich radial nach innen verjungende Rippen (1) aufweist, wobei das Formteil ein Teil des Ständergehäuses (4) mit mindestens drei Gehäuseinnenrippen (1, 8, 10) bildet und wobei das Formteil ein Teil eines längs der Achse des Elektromotors teillasen Ständergehäuses (4) bildet, mit jeweils mindestens einer V-förmigen eine äußere Ausspasung aufweisend Gehäuseinnenrippe (1), wobei die Ständergehäuseteile (4) zusammengesetzt das Blechpaket über die Gehäuseinnenrippen (1, 8, 10) fixieren und wobei die mindestens eine V-förmige Gehäuseinnenrippe (1) eines Ständergehäuseteils (4) eine Hauptvorzugsrichtung aufweist, die der zur Motorachse radialen Hauptentformungsrichtung (7) eines zur Herstellung benötigten Gußmodells entspricht.

2. Gegossenes Formteil (4) nach Anspruch 1, **dadurch gekennzeichnet, dass** die Gehäuseinnenrippe (1) aus mindestens zwei V-förmig angeordneten Stegen besteht.

3. Gegossenes Formteil (4) nach einem der vorhergehenden Ansprüche, **dadurch gekennzeichnet, daß** die Gehäuseinnenrippe (1) in definierten axialen Abständen außen liegende tangentiale Versteifungselemente (2) aufweist.

4. Gegossenes Formteil (4) nach Anspruch 3, **dadurch gekennzeichnet, dass** die über den Umfang verteilten und nicht am Rand befindlichen Gehäuseinnenrippen (1) einer Ständergehäusehälfte (4) eine Hauptvorzugsrichtung (7) aufweisen.

## Claims

1. Shaped casting (4) of an electric motor with a stator having at least one core stack, in particular of an enclosed-ventilated internally cooled electric motor, which casting (4) has ribs (1) running in the axial direction of the electric motor and narrowing radially inward, wherein said casting forms a part of the stator housing (4) having at least three inner housing ribs (1, 8, 10) and wherein the casting forms a part of a stator housing (4) that can be separated along the axis of the electric motor, having in each case at least one V-shaped inner housing rib (1) that has an outer recess, wherein in their assembled condition the stator housing parts (4) secure the core stack via the inner housing ribs (1, 8, 10) and wherein the at least one V-shaped inner housing rib (1) of a stator housing part (4) has a main preferred direction corresponding to the main direction of removal from the mould (7), which direction is radial with respect to the motor axis, of a casting pattern required for production.

2. Shaped casting (4) according to claim 1, **characterised in that** the inner housing rib (1) consists of at least two webs arranged in a V shape.

3. Shaped casting (4) according to one of the preceding claims, **characterised in that** the inner housing rib (1) has external tangential stiffening elements (2) with defined axial spacing.

4. Shaped casting (4) according to claim 3, **characterised in that** the inner housing ribs (1) of a stator housing half (4) that are distributed over the circumference and not located on the edge have a main preferred direction (7).

## Revendications

1. Pièce (4) moulée, coulée d'un moteur électrique comprenant au moins un stator ayant un paquet de tôles, notamment d'un moteur électrique, blindé ventilé et à refroidissement intérieur, pièce (4) moulée qui a des nervures (1) s'étendant dans la direction axiale du moteur électrique et se rétrécissant radialement vers l'intérieur, dans laquelle la pièce moulée forme une partie de la carcasse (4) du stator en ayant au moins trois nervures (1, 8, 10) intérieures de stator et dans laquelle la pièce moulée forme une partie d'une carcasse (4) de stator pouvant être divisée le long de l'axe du moteur électrique, comprenant respectivement au moins une nervure (1) intérieure de carcasse en forme de V, ayant un évidement extérieur, les parties (4) de carcasse du stator immobilisant, en étant rassemblées, le paquet de tôles par les nervures (1, 8, 10) intérieures de la carcasse, la au moins une nervure (1) intérieure en forme de V de la carcasse, d'une partie (4) de la carcasse de stator ayant une direction préférée principale, qui correspond à la direction (7) de démoulage principal radial à l'axe du moteur d'un modèle de coulée nécessaire pour la fabrication.

2. Pièce (4) moulée, coulée suivant la revendication 1, **caractérisée en ce que** la nervure (1) intérieure de la carcasse est constituée d'au moins deux barrettes disposées en forme de V.

3. Pièce (4) moulée, coulée suivant l'une des revendications précédentes, **caractérisée en ce que** la nervure (1) intérieure de la carcasse a des éléments (2) tangentiels de renfort se trouvant à l'extérieur à des distances axiales définies.

4. Pièce (4) moulée, coulée suivant la revendication 3, **caractérisée en ce que** les nervures (1) intérieures de la carcasse réparties sur le pourtour et se trouvant sur le bord d'une moitié (4) de carcasse de stator ont une direction (7) préférée principale.
